(19) **Europäisches Patentamt**
**European Patent Office**
**Office européen des brevets**

(11) **EP 4 787 255 A1**

(12) **EUROPEAN PATENT APPLICATION**

(43) Date of publication:
05.08.2026 Bulletin 2026/32

(21) Application number: 26151876.5

(22) Date of filing: 14.01.2026

(51) International Patent Classification (IPC):
*G06Q 10/06* (2023.01)     *G06Q 10/04* (2023.01)
*G06N 5/01* (2023.01)

(52) Cooperative Patent Classification (CPC):
G06Q 10/06311; G06N 5/01; G06Q 10/04;
G06Q 10/06; G06Q 10/0631; G06Q 10/063112

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 30.01.2025 US 202519041524

(71) Applicant: **Intuit Inc.**
**Mountain View, CA 94043 (US)**

(72) Inventors:
• **SRIVASTAVA, Ashok N.**
**Mountain View, 94043 (US)**
• **KUMAR, Sricharan Kallur Palli**
**Mountain View, 94043 (US)**

(74) Representative: **D Young & Co LLP**
**3 Noble Street**
**London EC2V 7BQ (GB)**

(54) **CUSTOMER SUCCESS OPTIMIZATION VIA MIXED INTEGER PROGRAMMING**

(57) A method includes obtaining an expert availability forecasting model including at least a first time slot, a multitude of available experts corresponding to the at least first time slot, and a predicted customer demand corresponding to the at least first time slot. An expert allocation model is generated, including a first set of available experts allocated to the at least first time slot based on the expert availability forecasting model. A first set of customers is selected, corresponding to the predicted customer demand. The first set of customers is matched to the corresponding first set of available experts in the at least first time slot, based on the expert allocation model, to obtain a customer-expert allocation schedule. The method further includes transmitting the customer-expert allocation schedule to a performance analytics dashboard. The method further includes monitoring at least one data source for at least one expert availability event.

FIG. 2

EP 4 787 255 A1

**Description**

BACKGROUND

A vast number of software services or products are designed and developed to manage diverse aspects of a business or an individual's life, such as finance, taxation, payroll, operations, inventory, regulatory compliance, *etc*. The customers of these software services or products are individuals or business entities who need assistance. Frequently, customers require additional assistance beyond those generally offered features and functionality. More particularly, customers may require the services of subject matter experts, for example, accounting specialists, tax-preparation specialists, supply chain experts, *etc.* The software service or product typically includes features allowing a customer to request the services of a subject matter expert. The subject matter expert's services is typically available via the software service or product platform. A particular subject matter expert may be matched and allocated to the customer based on the needs of the customer. Additionally, the coordination of customer-expert allocations for the numerous customers of the software service or product worldwide may be managed by customer support personnel or software service administrators using specific dashboards on software tools for resource allocation.

The coordination and management of allocation of experts to customers may be modeled as a resource allocation problem. A goal of a resource allocation model is to optimize the allocation of resources (for example, subject matter experts) to requesters (for example, customers) in accordance with constraints to achieve optimization objectives among variable criteria. Resource allocation models are formulated as a combination of local optimization problems. Each local optimization may be optimized independently. A challenge arises in capturing and incorporating new, unexpected, and dynamically occurring constraints into such a resource allocation model. Adding dynamic constraints necessitates coordination of the local optimization problems of the resource allocation model. The coordination may be computationally intensive and complex. Another challenge arises in avoiding significant delays in dynamically adapting the resource allocation model essentially in real time in response to the addition of dynamic constraints.

SUMMARY

Particular embodiments are set out in the independent claims. Various optional examples are set out in the dependent claims. In general, in one aspect, one or more embodiments relate to a method. The method includes obtaining an expert availability forecasting model including at least a first time slot, a multitude of available experts corresponding to the at least first time slot, and a predicted customer demand corresponding to the at least first time slot. The method further includes generating an expert allocation model including a first set of available experts selected from the available experts, allocated to the at least first time slot based on the expert availability forecasting model. The method further includes selecting a first set of customers corresponding to the predicted customer demand. The method further includes matching the first set of customers to the corresponding first set of available experts in the at least first time slot, based on the expert allocation model, to obtain a customer-expert allocation schedule. The method further includes transmitting the customer-expert allocation schedule to a performance analytics dashboard. The method further includes monitoring at least one data source for at least one expert availability event.

In general, in one aspect, one or more embodiments relate to a system. The system includes at least one computer processor, a data repository, a demand predictor, executing on the at least one computer processor, a resource allocation engine having a MILP solver, and executing on the at least one computer processor, an adjustment tool, executing on the at least one computer processor, and a customer management application, executing on the at least one computer processor. The customer management application is configured to obtain, from the demand predictor, an expert availability forecasting model comprising at least a first time slot, a plurality of available experts corresponding to the at least first time slot, and a predicted customer demand corresponding to the at least first time slot. The customer management application is further configured to cause the resource allocation engine to generate an expert allocation model including a first set of available experts selected from the available experts, allocated to the at least first time slot based on the expert availability forecasting model. The customer management application is further configured to select a first set of customers corresponding to the predicted customer demand. The customer management application is further configured to match the first set of customers to the corresponding first set of available experts in the at least first time slot, based on the expert allocation model, to obtain a customer-expert allocation schedule. The customer management application is further configured to transmit the customer-expert allocation schedule to a performance analytics dashboard. The customer management application is further configured to cause the adjustment tool to monitor at least one data source for at least one expert availability event.

In general, in one aspect, one or more embodiments relate to a method. The method includes obtaining an expert availability forecasting model including at least a first time slot, a multitude of available experts corresponding to the at least first time slot, and a predicted customer demand corresponding to the at least first time slot. The method further includes generating an expert allocation model including a first set of available experts selected from the available experts, allocated to the at least first time slot based on the expert availability forecasting model. The method further includes selecting a first set of customers corresponding to the predicted customer demand. The method further includes matching the first set of customers to the corresponding first set of available experts in the at least first time slot, based on the expert allocation model to obtain a customer-expert allocation schedule. The method further includes transmitting the customer-expert allocation schedule to a performance analytics dashboard. The method further includes monitoring at least one data source for at least one expert availability event. The method further includes updating the expert availability forecasting model with the at least one expert availability event, an actual expert availability corresponding to the at least first time slot, and an actual customer demand corresponding to the at least first time slot, to obtain an updated expert availability model. The method further includes modifying the expert allocation model based on the updated expert availability model to obtain an updated expert allocation model. The method further includes updating the customer-expert allocation schedule based on the updated expert allocation model and the actual customer demand by selecting a second set of customers based on the actual customer demand, and matching the second set of customers to a second set of available experts to obtain an updated customer-expert allocation schedule. The method further includes transmitting the updated customer-expert allocation schedule to the performance analytics dashboard.

Other aspects of one or more embodiments will be apparent from the following description and the appended claims.

BRIEF DESCRIPTION OF DRAWINGS

FIG. 1 shows a computing system, in accordance with one or more embodiments.

FIG. 2 shows a flowchart of a method for expert allocation to a customer, with timely adjustment, in accordance with one or more embodiments.

FIG. 3 shows a flowchart of a method for mixed integer model generation and solution for expert allocation to customers, in accordance with one or more embodiments.

FIG. 4 shows an example of a dashboard status, in accordance with one or more embodiments.

FIG. 5 shows an example of customer/expert demand at various time intervals, in accordance with one or more embodiments.

FIG. 6A and FIG. 6B show a computing system, in accordance with one or more embodiments.

Like elements in the various figures are denoted by like reference numerals for consistency.

DETAILED DESCRIPTION

One or more embodiments are directed to the coordination and management of allocation of subject matter experts to customers. Subject matter experts are generally human experts or expert systems specializing in a business, finance, or operations domain, or other domains. The subject matter experts may be available to customers via a software service or product platform.

By way of example, the software service or product may be tax filing software designed and developed for customers to prepare and file tax returns with governmental agencies. The tax preparation and filing process for customers of tax filing software may encompass a range of varied forms, deductions and credits that may be associated with the diverse needs of the users. Moreover, while a part of the tax preparation and filing process may be completed via the tax filing software, in many cases, customers may require or wish to avail help from a human tax professional or expert system to optimize the tax outcome while adhering to regulatory constraints and deadlines while avoiding penalties.

Initially, predictive analytics are performed on historical data pertaining to customer demand and expert allocation to obtain an expert availability forecasting model for a set of predefined time slots, for a time period in advance (e.g., thirty-minute time slots for a year in advance). A mixed integer linear programming (MILP) model is used to generate an expert allocation model, based on the expert availability forecasting model. The MILP model integrates integer and continuous variables within a single, global multi-objective optimization model, including one or more constraint definitions.

The expert allocation model is used to match customers to experts based on matching constraints, to obtain a customer-expert allocation schedule. The matching constraints may include expert availability obtained from the expert allocation model, areas of expertise of the available experts, and customers' expertise needs. The expert allocation model is dynamically updatable, responsive to "real-world" events that may impact expert availability approaching the occurrence of the predefined time slots. The "real-world" events may be added to the MILP model in the form of new formulated constraints or as updated existing constraints. The MILP model may be re-processed as a result of the captured "real-world" events to obtain an updated expert allocation model. Further, a customer-expert allocation schedule may be updated based on the updated expert allocation model.

One or more external data sources may be monitored to capture real-world events that may impact the expert allocation model. The real-world events may occur within a predefined time period, e.g., twenty four hours prior to and approaching a particular time-slot entry in the expert allocation model. Further, the real-world events may impact individual experts, e.g., unexpected unavailability of an expert due to a personal or family event. Additionally, the real-world events may impact groups of experts, for example, an internet, or power outage, or a weather event in a location in which a group of experts is co-located. The existing customer-expert allocation schedules and external data sources may be monitored via a performance analytics dashboard. The occurrence of an unexpected real-world event impacting one or more customer-expert allocation schedules may prompt the addition of, or modification to, one or more constraints of the MILP model. Thus, when re-processed, the MILP model may generate an updated expert allocation model in response to the unexpected real-world event. Consequently, the customer-expert allocation schedule may be correspondingly updated.

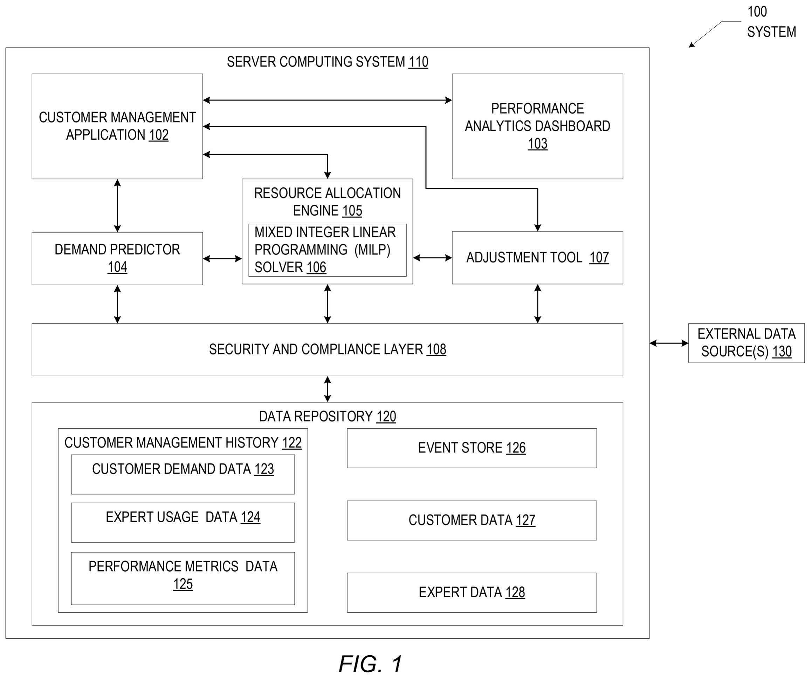

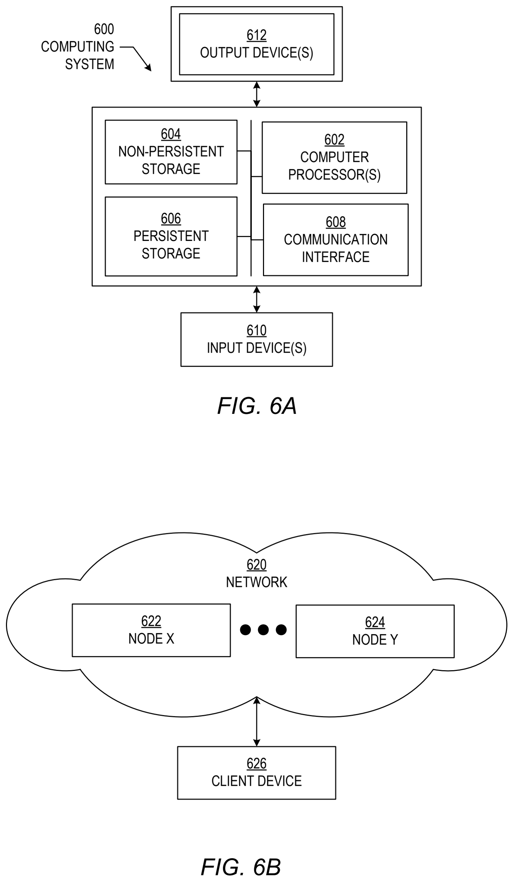

Attention is now turned to the figures. FIG. 1 shows a computing system (100), in accordance with one or more embodiments. The system (100) shown in FIG. 1 includes a server computing system (110). The server computing system (110) is one or more computer processors, data repositories, communication devices, and supporting hardware and software. The one or more computer processors may be one or more hardware or virtual processors which may execute computer readable program code that defines one or more applications, such as the customer management application (102), the performance analytics dashboard (103), the demand predictor (104), the resource allocation engine (105), and the adjustment tool (107). An example of the one or more computer processors is described with respect to the computer processor(s) (602) of FIG. 6A.

The server computing system (110) may be in a distributed computing environment. The server computing system (110) is configured to execute one or more applications, such as the customer management application (102), the performance analytics dashboard (103), the demand predictor (104), the resource allocation engine (105), and the adjustment tool (107). An example of a computer system and network that may form the server computing system (110) is described with respect to FIG. 6A and FIG. 6B.

The system shown in FIG. 1 includes a data repository (120). The data repository (120) is a type of storage unit or device (e.g., a file system, database, data structure, or any other storage mechanism) for storing data. The data repository (120) may include multiple different, potentially heterogeneous, storage units and/or physical storage devices.

The data repository (120) may include a customer management history (122). The customer management history (122) may include customer demand data (123), pertaining to individual or business customers. The customer management history (122) may further include expert usage data (124). The customer demand data (123) may include information pertaining to times and dates in a previous year, or years, of customer demand peaks and troughs, average customer demand, *etc.* For example, customer demand may peak in the two weeks ahead of an annual tax filing deadline. This peak in customer demand may be reflected in the customer demand data (123) in the customer management history (122). Correspondingly, the expert usage data (124) may include information pertaining to times and dates in a previous year, or years, of expert usage peaks and troughs, average expert usage, *etc.* For example, in direct correlation with the customer demand data (123), the expert usage data (124) may show a peak in expert usage. A peak in expert usage may indicate a sparsity, or trough, of expert availability in the two weeks ahead of the annual tax filing deadline. The customer management history (122) may further include performance metrics (125). The performance metrics (125) may include data pertaining to performance metrics of the tax filing software and customer-expert allocation feature(s). Performance metrics may include, for example, first contact resolution, average response time, customer effort scores, resolution time, follow-up rate, customer retention rate, cost efficiency ratio, cost reduction impact on customer satisfaction, *etc.* In one or more embodiments, the customer management history (122) may be stored in one or more relational databases such as MySQL®, Microsoft SQL Server®, *etc.* In other embodiments, the customer management history (122) may be stored in NoSQL databases, *e.g.*, MongoDB®, Cassandra®, Amazon DynamoDB®, *etc.* In additional embodiments, the customer management history (122) may be stored in data stores, e.g., Google Cloud Firestore®, Azure Cosmos DB®, *etc.*

The data repository (120) may further include customer data (127) and expert data (128). The customer data (127) may include data pertaining to customer information additional to customer demand data (123) of the customer management history (122). Likewise, the expert data (128) may include data pertaining to expert information additional to expert usage data (124) of the customer management history (122). For example, the customer data (127) may include customer identification details, previous tax forms filed, matched experts, specific customer tax needs, *etc.* Expert data (128) may include expert identification details, area of expertise, billing rates, hours available, *etc.* Customer data (127) and expert data (128) may be stored in relational databases, or in unstructured data stores in the data repository.

The data repository (120) may include an event store (126). The event store (126) may include information pertaining to previous occurrences of real-world events that may have affected customers or experts. For example, groups of customers or experts in a particular geographical area may be affected by weather events, network outages, power outages, *etc.* In another example, individual experts may be unable to keep their appointed slots with customers, for various reasons including personal events, regulatory or compliance scenarios, *etc.* The event store (126) may include information pertaining to the nature of the event, the time and date of the event, the effect on expert availability (duration, time slots that became unusable due to total non-availability of experts, *etc.*). The event store (126) may be stored in event store databases, for example, EventStoreDB®, AWS® EventBridge, Azure® EventGrid, Apache Kafka, *etc.* In one or more embodiments, the event store (126) may include events captured from streaming data in a current time frame, for example, within the previous 24 hours of the current date and time.

The server computing system (110) may include a customer management application (102). The customer management application (102) is software or application specific hardware which, when executed by the one or more computer processors of the server computing system (110), controls and coordinates operation of the software or application specific hardware described herein. In particular, the customer management application (102) may orchestrate the execution of the demand predictor (104), the resource allocation engine (105), and the adjustment tool (107) to generate and update customer-expert allocation schedules. Further, the customer management application (102) may manage customer profiles, preferences, and appointment scheduling. The customer management application (102) may additionally match customers to experts based at least on area of expertise and customer needs, and inputs from the demand predictor (104), the resource allocation engine (105), and the adjustment tool (107). Further, in one or more embodiments, the customer management application (102) may work in conjunction with the performance analytics dashboard (103) to receive adjustments and changes related to expert allocation and assignments to customers, generated by administrators or system managers of the customer management application (102). As shown in FIG. 1, the customer management application (102) and the performance analytics dashboard (103) are shown as different components. Different architectural arrangements may be possible. For example, the performance analytics dashboard (103) may be a part of, or included within, the customer management application (102).

The server computing system (100) may include a performance analytics dashboard (103). The performance analytics dashboard (103) is software or application specific hardware which, when executed by the one or more computer processors of the server computing system (110), presents customer expert allocation schedules and performance metrics of the customer management application (102) to a user of the customer management application (102). A user of the customer management application (102) may be a system administrator, a customer support staff member, an analytics developer, *etc.* The user of the customer management application (102) may manage and coordinate the customer expert allocation schedules of the customer base of the software service or product via the performance analytics dashboard (103). In one or more embodiments, the customer-expert allocation schedules may include, for example, customer data, expert data, time slots allocated, billing rates, *etc.* Further, performance metrics of the customer management application (102) may include, for example, first contact resolution, average response/handling time, utilization rate of experts, schedule adherence by experts, expert availability, expert workload balance, customer effort scores, resolution time, follow-up rate, customer retention rate, cost efficiency ratio, cost reduction impact on customer satisfaction, *etc.* The performance metrics may indicate aspects of needed improvement to the customer-expert allocation schedule. By way of example, a lower schedule adherence rate may indicate that experts may be overly scheduled to customers, impacting service quality and customer satisfaction. The schedule adherence rate may be further reflected in an unbalanced workload for certain experts. The schedule adherence rate and workload balance performance metrics in conjunction, may indicate to a customer satisfaction staff member that the customer-expert allocation schedule needs to be adjusted, or that more experts may need to be hired/on-boarded/commissioned.

The server computing system (110) further includes a demand predictor (104). The demand predictor (104) is software or application specific hardware which, when executed by the one or more computer processors of the server computing system (110), generates a demand prediction model. The demand prediction model is a tax preparation demand model in predefined time slots for an advance period of time. In one example, the predefined time slots may be 30-minute time slots, and the advance period of time may be for a year in advance of the current date and time. That is, if the current date is January 1, 2023, then the demand prediction model may be a tax preparation demand model in 30-minute time slots from January 1, 2023, to January 1, 2024. As a general overview, a demand prediction model is a set of techniques or methods for forecasting future customer demand for products (*e.g.*, cloud-based tax preparation services), or services (*e.g.*, tax preparation services by experts). Demand prediction models may leverage historical data and statistical analysis to estimate the quantity of products or services customers are likely to purchase over a specific period of time. Some examples of demand prediction models include time series machine-learning models (*e.g.*, ARIMA, SARIMA, Prophet, *etc.*), causal models, qualitative forecasting, statistical machine learning models, *etc.* Other examples include machine learning models such as regression models (*e.g.*, linear regression, random forest, XGBoost, *etc.*) or neural networks (*e.g.*, LSTM, GRU, *etc.*). The machine learning models may be trained on large historical datasets, and continuously learn from new data, to identify complex demand patterns that may be overlooked by conventional analytics. Thus, the demand predictor (104) may deploy one or more of the aforementioned machine learning models to generate a demand prediction model. Specifically, the demand prediction model may predict the availability of human tax-preparation experts in predefined time slots over a length of time.

The server computing system (110) further includes a resource allocation engine (105). The resource allocation engine (105), as shown in FIG. 1, further includes a mixed integer linear programming (MILP) solver (106). The resource allocation engine (105) is software or application specific hardware which, when executed by the one or more computer processors of the server computing system (110), employs mixed integer linear programming to optimize the allocation of experts to customers based on predicted demand. The predicted demand may be obtained from the demand prediction model generated by the demand predictor (104). The resource allocation engine (105) may be configured to define objective functions, constraints, and object variables, based on inputs obtained from the customer management application (102) and/or the performance analytics dashboard (103). In one or more embodiments, the resource allocation engine (105) may additionally obtain inputs from configuration files, shell scripts, *etc.*

The MILP solver (106) is a computational tool used to solve MILP models that involve both integer and continuous variables. As a general overview, a MILP model is a type of mathematical optimization model that involves both integer and continuous variables. It aims to find the best solution from a set of feasible solutions, subject to a set of linear constraints and a linear objective function. The "mixed" part refers to the combination of integer (whole number) and continuous (fractional) variables in the model. Thus, MILP solvers aim to solve MILP models by either maximizing or minimizing the linear or quadratic objective function of the MILP model subject to the constraints of the MILP model. The constraints in a MILP model may be linear or quadratic and must be satisfied by the solution. Further, some variables in a MILP model may be required to take integer values. MILP solvers use diverse methods to solve the objective functions in accordance with constraints that characterize a particular mixed integer linear programming model. An example of a method used by the MILP solver (106) is the branch-and-bound algorithm. The branch-and-bound algorithm systematically explores the feasible solution space by dividing it into smaller subproblems, solving them, and using bounds to eliminate suboptimal solutions. Another example of a technique that may be used by the MILP solver (106) is cutting planes, which includes adding additional constraints to the problem to exclude non-integer solutions without removing any feasible integer solutions. Examples of MILP solvers (106) include Gurobi® MILP solver, IBM® C Programming Language for eXecution (CPLEX) MILP solver, Solving Constraint Integer Programs (SCIP) MILP solver, *etc.*

The server computing system (110) further includes an adjustment tool (107). The adjustment tool (107) is software or application specific hardware which, when executed by the one or more computer processors of the server computing system (110), obtains information on real-world events occurring or that may have occurred within a predefined time period in advance of a customer-expert allocation schedule. The obtained information may further be used to cause an update operation to be performed on the customer-expert allocation schedule, in response to a change in availability of an individual expert or group of experts. In one or more embodiments, the adjustment tool (107) may generate an alert pertaining to a change in expert availability and send the alert to the customer management application (102). Additionally, the adjustment tool (107) may monitor the actual customer demand against the predicted customer demand within an advance time period, for example, 24 hours in advance of the current day/time. The adjustment tool (107) may make updates to the customer-expert allocation schedule based on the actual customer demand. In one or more embodiments, the adjustment tool (107) may be a customized client application, that monitors complex event processing systems. The complex event processing systems may handle real-time data streams. Examples of complex event processing systems/services include Amazon® Kinesis Data Analytics, Google® Cloud Dataflow, Apache Storm®, Azure® Stream Analytics, Confluent platform based on Apache Kafka®, *etc.* In other embodiments, the adjustment tool (107) may be a customized client application that monitors external data sources, for example, enterprise network performance logs, customer behavior streaming data, expert availability registers/rolls, weather data, news streams, *etc.*

The server computing system (110) includes a security and compliance layer (108). The security and compliance layer (108) is software or application specific hardware which, when executed by the one or more computer processors of the server computing system (110), implements data integrity, security, and compliance with regulatory standards concerning customer data and tax preparation practices. As shown in FIG. 1, function calls and program calls between the components of the server computing system (110) and the data repository (120) may be routed through a security and compliance layer (108). In one or more embodiments, data obtained from the data repository (120) may be obtained via calls to the security and compliance layer (108). Other architectural arrangements are possible. For example, various components of the server computing system (110), such as the demand predictor (104), resource allocation engine (105), adjustment tool (107), *etc.,* may include a built-in security and compliance layer. In one or more embodiments, the security and compliance layer (108) may be a customized set of application programming interface (API) calls, or function library calls.

The system shown in FIG. 1 includes one or more external data source(s) (130). The external data source(s) (130) may include enterprise network performance logs, customer behavior streaming data, expert availability registers/rolls, weather data, news streams, *etc.* In other words, external data sources (130) may include data streams broadcasting global events affecting large geographical areas or groups of customers and experts, and/or local events pertaining to individual customers, experts, or localized weather, power, and network events. For example, a local event may include a particular expert calling in with an unexpected non-availability status for a particular length of time. Similarly, a customer may cancel an appointment with an expert, due to an unexpected network outage/power outage in the customer's location. In another example, a global event may include a winter storm in a particular geographical area, affecting a group of experts and customers residing in the geographical area.

While FIG. 1 shows a configuration of components, other configurations may be used without departing from the scope of one or more embodiments. For example, various components may be combined to create a single component. As another example, the functionality performed by a single component may be performed by two or more components.

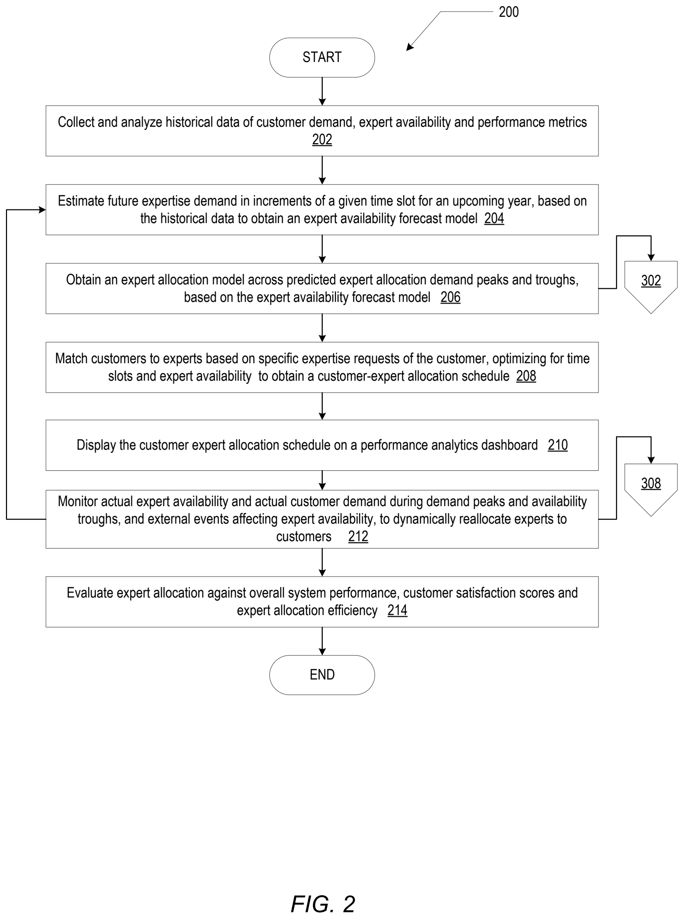

FIG. 2 shows a flowchart 200 of a method for expert allocation to customer(s) with timely adjustment, in accordance with one or more embodiments. The method of FIG. 2 may be implemented using the system of FIG. 1 and one or more of the steps may be performed on or received at one or more computer processors. While the various steps in the flowchart 200 are presented and described sequentially, at least some of the steps may be executed in different orders, may be combined, or omitted, and at least some of the steps may be executed in parallel. Furthermore, the steps may be performed actively or passively.

The flowchart 200 starts at Block 202. In Block 202, historical data of customer demand, expert availability and performance metrics may be collected and analyzed. In one or more embodiments, the customer management application may cause the demand predictor to obtain customer management history data from the data repository.

In Block 204, future expertise demand may be estimated in increments of a given time slot for an upcoming year to obtain an expert availability forecast model, based on the historical data obtained in Block 202 of the flowchart 200. In one or more embodiments, the customer management application may invoke the demand predictor to process the historical data. The demand predictor may in turn, process the customer management history data using one or more predictive analytics algorithms, to generate a demand prediction model. The demand prediction model is referred to as the expert availability forecasting model. The expert availability forecasting model obtained from the demand predictor may include at least a first time slot, multiple available experts corresponding to the at least first time slot, and a predicted customer demand corresponding to the at least first time slot. The expert availability forecasting model may include additional similar time slots, each time slot being associated with, or corresponding to multiple available experts, and a predicted customer demand for the particular time slot. For example, the expert availability forecasting model may predict that two working days before a federal tax filing deadline, the working hours may show a customer demand of 100 experts for each half-hour time slot of working hours. Additionally, the expert availability forecasting model may show the number of experts available in the two working days for each half-hour time slot varying between 75 and 125.

In one or more embodiments, obtaining the expert availability forecasting model may encompass obtaining (at least) expert usage data corresponding to a first expert of the multiple available experts, and a customer demand data corresponding to a first customer from the customer management history database in the data repository. Further, a machine learning model may be trained to predict at least a first time slot in which the first expert is available to the first customer, based on at least the expert usage data and the customer demand data. For example, the customer demand data corresponding to the first customer may show that previously the first customer requested human expert assistance between four weeks ahead of the tax filing deadline to two weeks before the tax filing deadline. Further, the expert usage data corresponding to the first expert may show that previously, the first expert was available three weeks before the tax filing deadline. In this case, the machine learning model may be trained to predict a first time slot occurring three weeks before the tax filing deadline in which the first expert may be available to the first customer.

In one or more embodiments, the machine learning model may be trained by the demand predictor. The machine learning model may be a time series machine learning model, a regression model, a neural network model, *etc.* As a brief overview, training the machine learning model may encompass cleaning and pre-processing the historical data. Further, exploratory data analysis may be performed on the preprocessed historical data, to identify patterns and trends in expert availability and customer demand. Furthermore, expert availability may be set as the target variable, and correlations between features of data and the target variable may be identified. Additionally, the preprocessed historical data may be split into training and testing datasets, and the machine learning model may be trained on the training dataset. In training the machine learning model, the model hyperparameters may be adjusted. The adjustment of the machine learning model hyperparameters may vary in accordance with the type of the machine learning model, and the adjustment technique (*e.g.*, grid search, random search, *etc.*). The machine learning model performance may be evaluated using metrics, e.g., Mean Absolute Error (MAE), Root Mean Squared Error (RMSE), or Mean Absolute Percentage Error (MAPE), *etc.* An additional step may include cross-validation of the machine learning model for robustness.

In one or more embodiments, the demand predictor may deploy the trained machine learning model to generate the expert availability forecasting model.

Additionally, or alternatively, in one or more embodiments, the demand predictor may use non-machine learning models, for example, simple moving average (SMA), simple exponential smoothing (SES), decomposition methods, naïve methods, *etc.*, to generate the expert availability forecasting model.

In Block 206 of flowchart 200, an expert allocation model is obtained across predicted expert allocation demand peaks and troughs. In one or more embodiments, the expert allocation model may be generated, based on the expert availability forecasting model. The expert allocation model may include a first set of available experts selected from the multiple available experts, allocated to the at least first time slot. In one or more embodiments, the time slots of the expert availability forecasting model may be associated with sets of available experts. In other words, each time slot may be associated with a set of available experts.

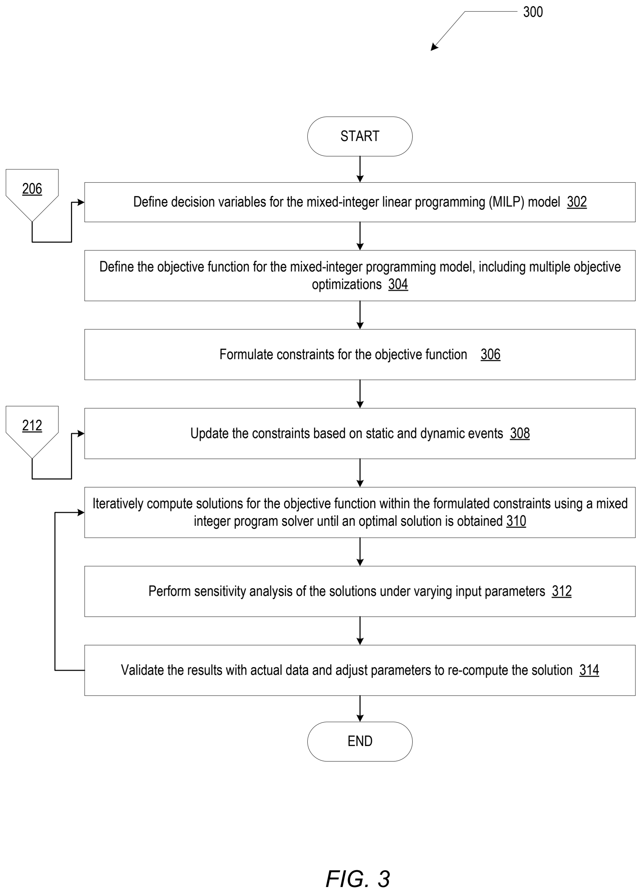

In one or more embodiments, the expert allocation model may be generated by the resource allocation engine. The resource allocation engine may be invoked by the customer management application upon obtaining the expert availability forecasting model. The expert availability forecasting model may be provided as input to the resource allocation engine. The resource allocation engine may instantiate and initialize the MILP solver based on parameters and input variable values obtained from the expert availability forecasting model. Further, the resource allocation engine may cause the MILP solver to be executed, to generate the expert allocation model. Instantiating and initializing the MILP solver is described in further detail in reference to flowchart 300 shown in FIG. 3.

In Block 208, customers may be matched to experts based on specific expertise requests of the customer, optimizing for time slots, and expert availability. In one or more embodiments, a first set of customers may be selected. The first set of customers may correspond to the predicted customer demand for the at least first time slot. Further, the first set of customers may be matched to the corresponding first set of available experts in the at least first time slot, based on the expert allocation model, to obtain a customer-expert allocation schedule. In one or more embodiments, the customers may be matched to the experts based on expertise requirements of customers and qualifications of experts. Thus, the matching process may entail obtaining a set of expertise requirements corresponding to a first customer of the first set of customers. A set of qualifications corresponding to a first expert of the first set of available experts may be obtained. A matching function may be used to determine a match between the set of expertise requirements and the set of qualifications. In response to determining a match between the set of expertise requirements and the set of qualifications, a check may be carried out to ascertain if the first expert is unmatched (*i.e.*, available to be assigned to a customer) in the at least first time slot. If the first expert is determined to be unmatched in the at least first time slot, the first expert may be matched to the first customer in the at least first time slot. In other words, the first expert is assigned to the first customer in the at least first time slot. Further, the first expert is rendered unavailable to other customers in the at least first time slot.

In one or more embodiments, the customer management application may match customers to experts based on the expert allocation model, expert qualifications, and customer's expertise requirements, based on one or more matching functions. Further, the matching functions may be optimized for one or more criteria (*e.g.*, maximizing/minimizing time slots, and maximizing expert availability). The matching functions may have various criteria for matching, and more than one matching expert may be identified for a particular customer. In this case, the optimization criteria may serve as a further selection factor to down-select the possible expert options for a particular customer to a single expert. In one or more embodiments, a set of possible expert options may be presented to a customer support staff member for selection via the performance analytics dashboard. Other display and selection options for assignment of an expert to a particular customer may be possible. For example, a customer may be presented with a set of possible matching experts within the tax-preparation application for selection.

One example of a matching function may be a fuzzy matching algorithm. A use case for a fuzzy matching algorithm may be that exact matches are not possible, and the best possible match is to be determined based on similarity. In this case, parameters of similarity may be defined, and assigned weights (*e.g.*, areas of expertise, customer reviews, customer expertise needs). A similarity score may be calculated for each expert-customer pair, based on a similarity function (*e.g.*, Cosine similarity, Jaccard similarity, Levenshtein distance, *etc.*). Further, customers may be matched to experts based on the highest similarity scores. In a similar manner, optimization criteria may be assigned weights and techniques such as linear programming or other heuristics may be used to optimize the overall matching score.

Other examples of matching functions include bipartite matching algorithms, Kuhn-Munkres algorithm, Gale-Shipley algorithm, integer linear programming, *etc.*

In Block 210, the customer-expert allocation schedule may be displayed on a performance analytics dashboard. In one or more embodiments, the customer management application may transmit the customer-allocation schedule to the performance analytics dashboard, to be reviewed by a user (*e.g.*, customer support staff). More specifically, the customer management application may render the customer-expert allocation schedule on the performance analytics dashboard, to be viewed by a user of the customer management application. Additionally, or alternatively, the expert allocation to a particular customer may be transmitted by the customer management application to the particular customer's tax-preparation application. For example, a customer may receive a notification in the tax-preparation application, or another form of communication such as an email or text message, informing the customer about a match. The customer may view the details of the expert while operating the tax-preparation application. Further, the customer may affirm the expert assignment and/or confirm the time-slots or reject the expert assignment and/or request different time-slots. In a similar manner, a user (*e.g.*, a customer support staff member) viewing the performance analytics dashboard may select a particular expert to be assigned to a particular customer in a time slot, based on the historical data. For example, a customer may have previously availed of a particular expert's service due to specific tax preparation needs of the customer's small business. The performance analytics dashboard may present the particular expert to the customer support staff member. The particular expert may be one of possible expert matches for the particular customer. Further, the customer support staff member may select the particular expert to be assigned to the particular customer, based on positive customer satisfaction reviews.

In Block 212, actual expert availability and actual customer demand during demand peaks and availability troughs, and external events affecting expert availability, are monitored, to dynamically reallocate experts to customers. In one or more embodiments, the customer management application may invoke the adjustment tool to monitor at least one data source for at least one expert availability event. Additionally, the adjustment tool may monitor internal data sources to obtain the actual expert availability and actual customer demand for a given time period, for example, the next twenty-four hours. The adjustment tool may be invoked to execute as a background process. Further, the given time period may be adjusted (for example, for the next six hours) during seasonal demand peaks and availability troughs, for example, between two and three days before a tax filing deadline.

The process of dynamically reallocating experts to customers in response to an expert availability event, updated actual expert availability, and/or actual customer demand may encompass iteratively performing Blocks 204 through 212 of the flowchart 200. In one or more embodiments, the expert availability forecasting model may be updated with the at least one expert availability event, an actual expert availability corresponding to the at least first time slot, and an actual customer demand corresponding to the at least first time slot, to obtain an updated expert availability model, in accordance with the steps of Block 204. Further, the expert allocation model may be modified based on the updated expert availability model to obtain an updated expert allocation model, in accordance with the steps of Block 206. Furthermore, the customer-expert allocation schedule may be updated based on the updated expert allocation model and the actual customer demand by selecting a second set of customers based on the actual customer demand, and matching the second set of customers to a second set of available experts, to obtain an updated customer-expert allocation schedule, in accordance with the steps of Block 208. Additionally, the updated customer-expert allocation schedule may be transmitted to the performance analytics dashboard, viewable by a user (customer support staff personnel), in accordance with the steps of Block 210.

In one or more embodiments, updating the expert availability forecasting model may entail modifying the set of multiple available experts. In one or more embodiments, the demand predictor may modify the set of multiple available experts corresponding to the at least first time slot. The demand predictor may modify the set of multiple available experts responsive to the at least one expert availability event corresponding to the at least first time slot. A modified set of available experts corresponding to the at least first time slot may be obtained. Further, a second set of available experts from the modified set of multiple available experts may be selected, based on the actual expert availability. The demand predictor may modify the expert availability forecasting model including the at least first time slot, the second set of available experts, and the actual customer demand to obtain the updated expert availability model.

In one or more embodiments, the resource allocation engine may modify the expert allocation model based on the updated expert availability model. The modification of the expert allocation model is described in detail in reference to flowchart 300 shown in FIG. 3.

In one or more embodiments, the customer management application may update the customer-expert allocation schedule. The customer management application may obtain a set of expertise requirements corresponding to a first customer of the second set of customers. Further, the customer management application may match the set of expertise requirements to a set of qualifications corresponding to a first expert of the second set of available experts based on a matching function. In response to determining a match between the set of expertise requirements and the set of qualifications, the customer manager application may ascertain if the first expert is unmatched in the at least first time slot. In response to determining that the first expert is unmatched in the at least first time slot, the customer management application may match the first expert to the first customer in the at least first time slot.

In Block 214, expert allocation may be evaluated against overall system performance, customer satisfaction scores and expert allocation efficiency. Other criteria may be used. In one or more embodiments, the resource allocation engine may evaluate the MILP model used to generate the expert allocation model. In one or more embodiments, the evaluation step may be performed as a periodic background process. In other embodiments, a user of the customer management application may initiate the evaluation step via the performance analytics dashboard.

FIG. 3 shows a flowchart 300 for a method for mixed integer model generation and solution for expert allocation to customers, in accordance with one or more embodiments. The method of FIG. 3 may be implemented using the system of FIG. 1 and one or more of the steps may be performed on or received at one or more computer processors. While the various steps in the flowchart 200 are presented and described sequentially, at least some of the steps may be executed in different orders, may be combined, or omitted, and at least some of the steps may be executed in parallel. Furthermore, the steps may be performed actively or passively. In one or more embodiments, the resource allocation engine may invoke the MILP solver to solve the MILP model. The MILP model features one or more decision variables, one or more constraints, and an objective function.

In one or more embodiments, Equations (1) to (6) may define the MILP model:

$$x_{I,t} := \begin{cases} 1, I \to C \ in \ t \\ 0, otherwise \end{cases} \tag{1}$$

$$y_{I,t} := N_t; \forall I \ in \ t \tag{2}$$

$$O_F := \min_c \left( \sum_{I,t} c_I y_{I,t} + \lambda \sum_{I,t} 1 - x_{I,t} \right) \tag{3}$$

$$C_1 := d_t : \sum_I x_{I,t} \geq d_t, \forall t \tag{4}$$

$$C_2 := \sum_t y_{I,t} \leq H_I^{max}, \forall I \tag{5}$$

$$C_3 := x_{I,t} \leq y_{I,t} \forall I, t \tag{6}$$

Equations (1) and (2) define the decision variables for the MILP model. In Equation (1), decision variable $x_{I,t}$ refers to an integer $x$, set to 1 if an expert $I$ is assigned to a customer C in time slot $t$, and 0 otherwise. Thus, $x$ characterizes the state of an expert $I$ assigned to a customer $C$ in time slot $t$. If $x$ is set to 0, then the expert $I$ is not assigned to a (any) customer in time slot $t$. In other words, $x$ being set to 0 for an expert $I$ in time slot $t$, indicates that the expert $I$ is available to be assigned to a customer $C$ in time slot $t$.

In Equation (2), decision variable $y_{I,t}$ denotes the number of hours $N_t$ that an expert $I$ works in time slot $t$. $y_{I,t}$ may be an integer or continuous variable, depending on the granularity of increment needed.

Equation (3) defines the objective function of the MILP model. The objective function $O_F$ may seek to minimize operational costs $c$, while maximizing customer satisfaction, or another similar metric. In Equation (3), $c_I$ is the cost of employing expert $I$ per time slot, and $\lambda$ represents the penalty for unassigned customer requests (ensuring most customer demands are met, $i.e.$, customer satisfaction is maximized).

Equations (4), (5), and (6) are constraint formulations, in accordance with one or more embodiments of the MILP model. In other embodiments, other constraints may be possible. Additionally, constraints may be "relaxed" or selectively included or excluded in obtaining updated expert allocation models. Relaxing a constraint refers to modifying the constraint to render the objective function to converge to a solution with greater ease than if the constraint is applied in original form. For example, integer variables may be allowed to take on continuous values instead of just integer values. Other examples of relaxing constraints may include extending the range of variables ($e.g.$, originally 0 to 10, now -100 to +100), or changing strict inequalities to non-strict inequalities ($e.g.$, x > 100 to x >= 100). The technique of relaxing constraints may be deployed to obtain an initial feasible solution to a problem. Once a relaxed problem is solved, the solution may provide bounds or guidance for solving the original, more complex problem.

Equation (4) is a constraint for demand fulfilment. Compliance of the MILP model with the constraint of Equation (4) ensures that for each time slot $t$, the number of experts servicing customers meets the predicted customer demand. Thus, the constraint $C_1$ sets the number of experts assigned to customers, characterized by the decision variable $x_{I,t}$ in time slot $t$ to always be greater than or equal to the predicted customer demand $d_t$, in all the time slots.

Equation (5) formulates a constraint of working hours regulation. The constraint of Equation (5) may ensure that experts do not work more than a certain number of consecutive time slots, nor beyond contractual limitations. Thus, $H_I^{max}$ is the maximum allowable working hours for expert $I$. Constraint $C_2$ is defined as setting $y_{I,t}$, the number of hours that an expert $I$ works in time slot $t$, as always being less than or equal to $H_I^{max}$.

Equation (6) formulates a constraint for assignment consistency. Constraint $C_3$ may ensure that experts are only assigned to customers when the experts are actually scheduled. Thus, constraint $C_3$ is defined as setting $x_{I,t}$, the number of experts assigned to customers in time slot $t$, as always being less than or equal to $y_{I,t}$, the number of hours that an expert $I$ works in time slot $t$, for all experts $I$, working in time slot $t$.

The flowchart 300 starts at Block 302. In Block 302, decision variables are defined for the MILP model. In one or more embodiments, the decision variables are determined in accordance with Equations (1) and (2). In one or more embodiments, the customer management application may obtain the decision variable equations from a user of the customer management application via the performance analytics dashboard. In one or more embodiments, a first decision variable may be determined (defined) for the MILP model.

In Block 304, the objective function may be defined for the mixed-integer programming model. The objective function may include multiple objective optimizations. In one or more embodiments, the objective function of the MILP model may be defined based on the expert availability forecasting model. For example, the decision variable $x_{l,t}$ values may be obtained from the expert availability forecasting model. In a similar manner, values for $y_{l,t}$ may be obtained from the expert availability forecasting model. In one or more embodiments, the objective function may be defined as shown in Equation (3). In a similar manner to obtaining the decision variables, in one or more embodiments, the customer management application may obtain the objective function from a customer management application user via the performance analytics dashboard.

In Block 306, constraints are formulated for the objective function, for example, as shown in Equations (4), (5), and (6). In one or more embodiments, the constraints may be defined for the MILP model. For example, in a similar manner to obtaining the decision variables, in one or more embodiments, the customer management application may obtain the constraints from a customer management application user via the performance analytics dashboard. A defined MILP model may be obtained by performing the steps of Blocks 302, 304, and 306.

In Block 308, the constraints may be updated based on static and dynamic events. Block 308 may be triggered by Block 212 of the flowchart 200. In one or more embodiments, at least a first constraint of a MILP model may be updated, based on the updated expert availability model obtained in Block 212 of the flowchart 200.

Static events may refer to an actual expert availability corresponding to a time slot. The actual expert availability may be different from the predicted expert availability corresponding to the time slot. Accordingly, one or more constraints may be changed, for example, any of the constraints defined in Equations (4), (5), and (6). In a similar manner, actual customer demand for a time slot may be different from the predicted customer demand for the time slot. Likewise, one or more constraints may be changed, or added, to reflect the change in customer demand.

Dynamic events may refer to an unexpected event. For example, a weather event, a power outage, or a network outage in a geographical area where multiple experts may be co-located, or multiple customers may be co-located. In this case, one or more of the multiple experts may have previously scheduled time slots, however, with the occurrence of the dynamic event, the expert(s) may be rendered unavailable. Accordingly, one or more of the constraints may be updated to reflect the occurrence of the dynamic event and the resulting change in expert availability.

In Block 310, solutions for the objective function may be iteratively computed within the formulated constraints, using a MILP solver until an optimal solution is obtained. In one or more embodiments, the resource allocation engine may process the defined MILP model with the MILP solver to generate the expert allocation model. Processing the defined MILP model with the MILP solver may entail iterative solution computation of the objective function of the MILP model within the constraints until an optimal solution is reached. The optimal solution may comprise one or more stopping conditions, such as a minimized cost, maximized expert assignment to customers, *etc.*

In Block 312, sensitivity analysis of the solutions under varying input parameters is performed. In one or more embodiments, the MILP model solutions may be evaluated using sensitivity analysis. Sensitivity analysis refers to technique(s) used to determine how different values of an input variable affect a particular output variable under a given set of assumptions. Sensitivity analysis may facilitate understanding the robustness of a model and identifying the variables having the greatest influence on the output.

In Block 314, the solutions to the MILP model are evaluated with real data and parameters are adjusted to re-compute the solution(s). In one or more embodiments, Blocks 310, 312, and 314 may constitute the iterative processing loop of solving the MILP model with the MILP solver.

In one or more embodiments, Block 302 of the flowchart 300 may be triggered by Block 206 of the flowchart 200. Initially, a "baseline" expert allocation model may be generated by performing the steps of the flowchart 300. As external data sources and internal data source are continuously monitored, as shown in Block 212 of the flowchart 200, the "baseline" expert allocation model may be updated. More specifically, Block 212 of the flowchart 200 may trigger Block 308 of the flowchart 300. In one or more embodiments, at least a first constraint of the MILP model may be updated, based on the updated expert availability model. The MILP model may include at least a first decision variable, an objective function, and the first constraint. Further, the expert allocation model may be modified by (re)processing the MILP model with the MILP solver, to obtain the updated expert allocation model.

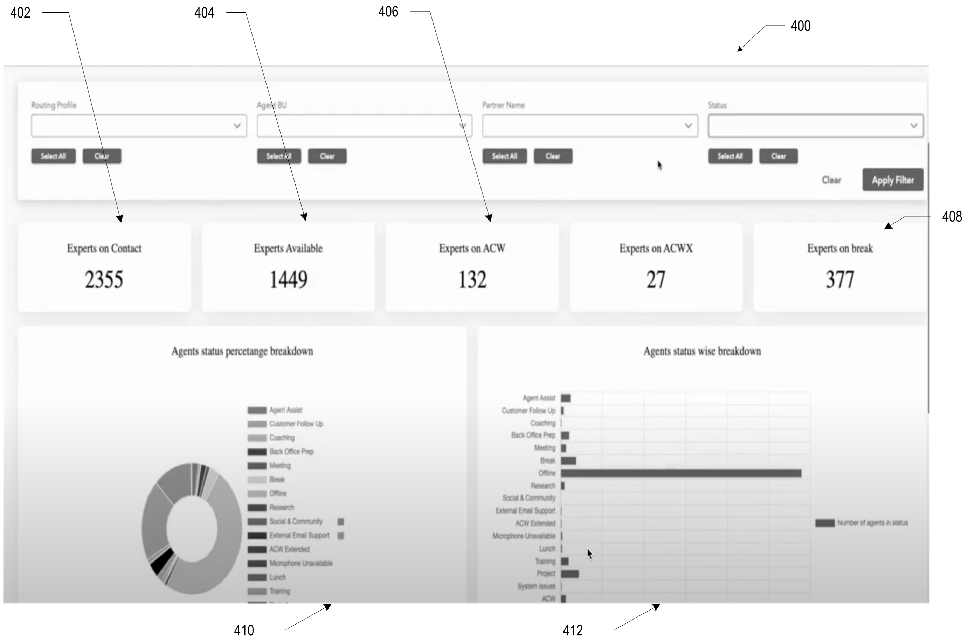

FIG. 4 shows an example of a performance analytics dashboard, in accordance with one or more embodiments. The following example is for explanatory purposes only and not intended to limit the scope of one or more embodiments.

Block 402 shows the number of experts on contact. That is, Block 402 shows the roster of experts that are offering their services as part of the tax-preparation software application features. Block 404 shows the actual number of available experts. Block 406 shows the number of experts on ACW, likewise, the adjacent block shows the number of experts on ACWX. Moreover, Block 408 shows the number of experts that are currently on break, that is, currently unavailable. Blocks 410 and 412 show the break-up of experts by status. As shown in FIG. 4, Block 410 is a pie chart showing the percentage of experts occupied with different tasks, or activities, for example, coaching, training, customer follow-up, etc. In a similar manner, Block 412 shows agent status by actual numbers. For example, a large number of experts show as offline in Block 412.

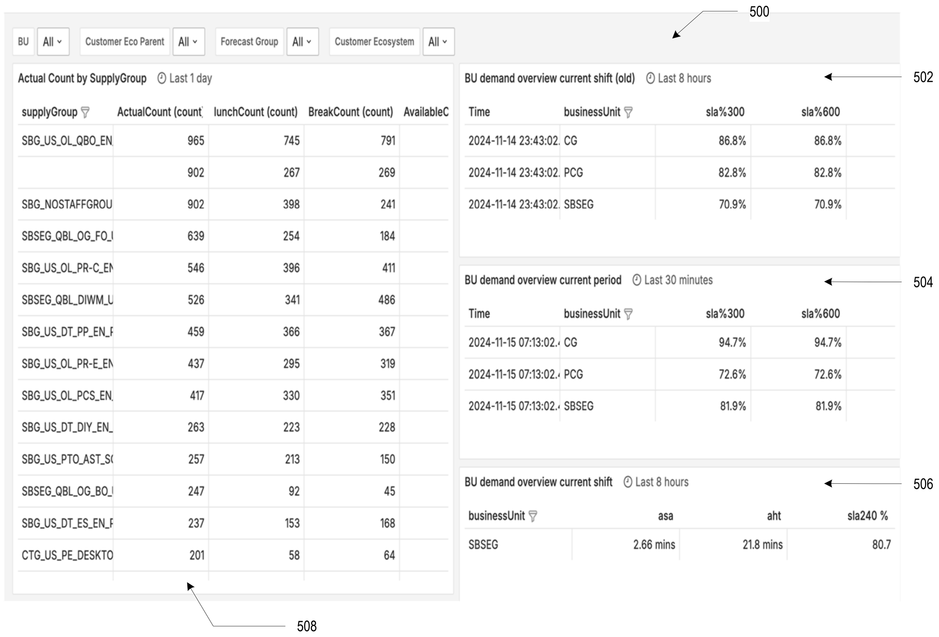

FIG. 5 shows an example of customer demand of experts over various time intervals. Block 502 shows the demand overview of the previous shift, in particular, the previous eight-hour shift. Block 504, on the other hand, shows the demand overview within the last 30 minutes. Block 506 shows the demand overview of the current shift, that is the current eight-hour shift. Block 508 shows the past 24 hours break-up of experts on hand, experts on a break (*e.g.*, lunchCount and breakCount). Experts are divided into supply groups.

The expert allocation model based on a MILP model may facilitate the determination of an optimal split of tasks between software and experts, based on factors such as error rates, time requirements, and costs. The MILP model may facilitate the minimization of costs by accurately projecting the necessary number of human tax experts needed at any given time, thus preventing both understaffing and costly overstaffing. In peak tax season, the expert allocation model may facilitate load balancing between automated processes and experts, avoiding bottlenecks. The expert allocation model may be used to assign experts where they are most needed, ensuring timely service under high demand. Further, in complex tax situations, the MILP model may provide decision support frameworks suggesting optimizations based on prior cases, current tax laws, and deductions or credits that might apply. The MILP model may thus facilitate semi-automated preparation in which the tax software application may suggest actions and the expert may validate and make the final decision. Furthermore, tax laws may frequently be updated. Resultingly, ensuring compliance to the latest version of tax law may be a challenge. MILP models may automate the process of adjusting practices within both automated and human-assisted processes in response to new or revised regulations effectively and efficiently.

The system dynamically updates constraints based on real-world events. Incorporating advanced machine learning models like reinforcement learning or neural networks may proactively predict and manage constraints even before external events occur, increasing robustness. Improvements in handling of extreme peak demand may be affected by introducing parallelized optimization methods or distributed computing frameworks, ensuring the system remains responsive during large-scale, high-stress situations. To enhance functionality, the system extensive API integrations with external tools such as customer relationship management (CRM) systems or real-time weather data platforms may be incorporated, facilitating broader real-world event monitoring and more seamless customer interactions.

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

For example, as shown in FIG. 6A, the computing system (600) may include one or more computer processor(s) (602), non-persistent storage device(s) (604), persistent storage device(s) (606), a communication interface (608) (*e.g.*, Bluetooth interface, infrared interface, network interface, optical interface, *etc.*), and numerous other elements and functionalities that implement the features and elements of the disclosure. The computer processor(s) (602) may be an integrated circuit for processing instructions. The computer processor(s) (602) may be one or more cores, or micro-cores, of a processor. The computer processor(s) (602) includes one or more processors. The computer processor(s) (602) may include a central processing unit (CPU), a graphics processing unit (GPU), a tensor processing unit (TPU), combinations thereof, *etc.*

The input device(s) (610) may include a touchscreen, keyboard, mouse, microphone, touchpad, electronic pen, or any other type of input device. The input device(s) (610) may receive inputs from a user that are responsive to data and messages presented by the output device(s) (612). The inputs may include text input, audio input, video input, *etc.,* which may be processed and transmitted by the computing system (600) in accordance with one or more embodiments. The communication interface (608) may include an integrated circuit for connecting the computing system (600) to a network (not shown) (*e.g.*, a local area network (LAN), a wide area network (WAN) such as the Internet, mobile network, or any other type of network) or to another device, such as another computing device, and combinations thereof.

Further, the output device(s) (612) may include a display device, a printer, external storage, or any other output device. One or more of the output device(s) (612) may be the same or different from the input device(s) (610). The input device(s) (610) and output device(s) (612) may be locally or remotely connected to the computer processor(s) (602). Many different types of computing systems exist, and the aforementioned input device(s) (610) and output device(s) (612) may take other forms. The output device(s) (612) may display data and messages that are transmitted and received by the computing system (600). The data and messages may include text, audio, video, *etc.,* and include the data and messages described above in the other figures of the disclosure.

Software instructions in the form of computer readable program code to perform embodiments may be stored, in whole or in part, temporarily or permanently, on a non-transitory computer readable medium such as a solid state drive (SSD), compact disk (CD), digital video disk (DVD), storage device, a diskette, a tape, flash memory, physical memory, or any other computer readable storage medium. Specifically, the software instructions may correspond to computer readable program code that, when executed by the computer processor(s) (602), is configured to perform one or more embodiments, which may include transmitting, receiving, presenting, and displaying data and messages described in the other figures of the disclosure.

The computing system (600) in FIG. 6A may be connected to, or be a part of, a network. For example, as shown in FIG. 6B, the network (620) may include multiple nodes (*e.g.*, node X (622) and node Y (624), as well as extant intervening nodes between node X (622) and node Y (624)). Each node may correspond to a computing system, such as the computing system (600) shown in FIG. 6A, or a group of nodes combined may correspond to the computing system (600) shown in FIG. 6A. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (600) may be located at a remote location and connected to the other elements over a network.

The nodes (*e.g.*, node X (622) and node Y (624)) in the network (620) may be configured to provide services for a client device (626). The services may include receiving requests and transmitting responses to the client device (626). For example, the nodes may be part of a cloud computing system. The client device (626) may be a computing system, such as the computing system (600) shown in FIG. 6A. Further, the client device (626) may include or perform all or a portion of one or more embodiments.

The computing system (600) of FIG. 6A may include functionality to present data (including raw data, processed data, and combinations thereof) such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown, as well as how data is presented to a user. Furthermore, the GUI may present data directly to the user, *e.g.*, data presented as actual data values through text, or rendered by the computing device into a visual representation of the data, such as through visualizing a data model.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

As used herein, the term "connected to" contemplates multiple meanings. A connection may be direct or indirect (*e.g.*, through another component or network). A connection may be wired or wireless. A connection may be a temporary, permanent, or a semi-permanent communication channel between two entities.

The various descriptions of the figures may be combined and may include, or be included within, the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers (*e.g.*, first, second, third, *etc.*) may be used as an adjective for an element (*i.e.*, any noun in the application). The use of ordinal numbers is not to imply or create any particular ordering of the elements, nor to limit any element to being only a single element unless expressly disclosed, such as by the use of the terms "before," "after," "single," and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and," unless expressly stated otherwise. Further, items joined by the conjunction "or" may include any combination of the items with any number of each item, unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

Thus, from one perspective, there has now been described a method that includes obtaining an expert availability forecasting model including at least a first time slot, a multitude of available experts corresponding to the at least first time slot, and a predicted customer demand corresponding to the at least first time slot. An expert allocation model is generated, including a first set of available experts allocated to the at least first time slot based on the expert availability forecasting model. A first set of customers is selected, corresponding to the predicted customer demand. The first set of customers is matched to the corresponding first set of available experts in the at least first time slot, based on the expert allocation model, to obtain a customer-expert allocation schedule. The method further includes transmitting the customer-expert allocation schedule to a performance analytics dashboard. The method further includes monitoring at least one data source for at least one expert availability event.

Further examples of feature combinations taught by the present disclosure are set out in the following numbered clauses:

1. A method comprising:

obtaining an expert availability forecasting model comprising at least a first time slot, a plurality of available experts corresponding to the at least first time slot, and a predicted customer demand corresponding to the at least first time slot;

generating an expert allocation model including a first set of available experts selected from the plurality of available experts, allocated to the at least first time slot based on the expert availability forecasting model;

selecting a first set of customers corresponding to the predicted customer demand;

matching the first set of customers to the corresponding first set of available experts in the at least first time slot, based on the expert allocation model, to obtain a customer-expert allocation schedule;

transmitting the customer-expert allocation schedule to a performance analytics dashboard; and

monitoring at least one data source for at least one expert availability event.

2. The method of clause 1, further comprising:

updating the expert availability forecasting model with:

the at least one expert availability event,
an actual expert availability corresponding to the at least first time slot,
and an actual customer demand corresponding to the at least first time slot,

to obtain an updated expert availability model;

modifying the expert allocation model based on the updated expert availability model to obtain an updated expert allocation model;

updating the customer-expert allocation schedule based on the updated expert allocation model and the actual customer demand by:

selecting a second set of customers based on the actual customer demand, and
matching the second set of customers to a second set of available experts,

to obtain an updated customer-expert allocation schedule; and

transmitting the updated customer-expert allocation schedule to the performance analytics dashboard.

3. The method of clause 1 or 2, wherein obtaining the expert availability forecasting model further comprises:

obtaining at least an expert usage data corresponding to a first expert of the plurality of available experts, and a customer demand data corresponding to a first customer from a customer management history database in a data repository; and

obtaining the expert availability forecasting model by:

predicting the at least first time slot, wherein the first expert is available to the first customer, based on at least the expert usage data, and the customer demand data.

4. The method of any preceding clause, wherein generating the expert allocation model further comprises:

defining at least a first decision variable for a mixed integer linear programming (MILP) model;

defining an objective function of the MILP model based on the expert availability forecasting model;

defining at least a first constraint of the MILP model, to obtain a defined MILP model comprising the at least first decision variable, the objective function and the at least first constraint; and

generating the expert allocation model by processing the defined MILP model.

5. The method of any preceding clause, wherein matching the first set of customers to the first set of available experts further comprises:

obtaining a set of expertise requirements corresponding to a first customer of the first set of customers; and

matching the set of expertise requirements to a set of qualifications corresponding to a first expert of the first set of available experts based on a matching function.

6. The method of clause 5, further comprising:

in response to determining a match between the set of expertise requirements and the set of qualifications, determining that the first expert is unmatched in the at least first time slot; and

in response to determining that the first expert is unmatched in the at least first time slot, matching the first expert to the first customer in the at least first time slot.

7. The method of clause 2, wherein updating the expert availability forecasting model further comprises:

responsive to the at least one expert availability event corresponding to the at least first time slot, modifying the plurality of available experts based on the at least one expert availability event to obtain a modified plurality of available experts corresponding to the at least first time slot;

selecting the second set of available experts from the modified plurality of available experts based on the actual expert availability; and

modifying the expert availability forecasting model including the at least first time slot, the second set of available experts, and the actual customer demand to obtain the updated expert availability model.

8. The method of clause 2 or 7, wherein modifying the expert allocation model further comprises:

updating at least a first constraint of a MILP model, based on the updated expert availability model, wherein the MILP model comprises at least a first decision variable, an objective function and the first constraint; and

modifying the expert allocation model by processing the MILP model, to obtain the updated expert allocation model.

9. The method of clause 2, 7 or 8, wherein updating the customer-expert allocation schedule further comprises:

obtaining a set of expertise requirements corresponding to a first customer of the second set of customers;

matching the set of expertise requirements to a set of qualifications corresponding to a first expert of the second set of available experts based on a matching function;

in response to determining a match between the set of expertise requirements and the set of qualifications, determining that the first expert is unmatched in the at least first time slot; and

in response to determining that the first expert is unmatched in the at least first time slot, matching the first expert to the first customer in the at least first time slot.

10. A system comprising:

at least one computer processor;

a data repository;

a demand predictor, executing on the at least one computer processor;

a resource allocation engine, comprising a MILP solver, and executing on the at least one computer processor;

an adjustment tool, executing on the at least one computer processor; and

a customer management application, executing on the at least one computer processor and configured to:

obtain, from the demand predictor, an expert availability forecasting model comprising at least a first time slot, a plurality of available experts corresponding to the at least first time slot, and a predicted customer demand corresponding to the at least first time slot,

cause the resource allocation engine to generate an expert allocation model including a first set of available experts selected from the plurality of available experts, allocated to the at least first time slot based on the expert availability forecasting model,

select a first set of customers corresponding to the predicted customer demand,

match the first set of customers to the corresponding first set of available experts in the at least first time slot, based on the expert allocation model, to obtain a customer-expert allocation schedule,

transmit the customer-expert allocation schedule to a performance analytics dashboard, and

cause the adjustment tool to monitor at least one data source for at least one expert availability event.

11. The system of clause 10, wherein the customer management application is further configured to:

obtain an updated expert availability model by causing the demand predictor to update the expert availability forecasting model with:

the at least one expert availability event,
an actual expert availability corresponding to the at least first time slot,
and an actual customer demand corresponding to the at least first time slot;

obtain an updated expert allocation model by causing the resource allocation engine to modify the expert allocation model based on the updated expert availability model;
update the customer-expert allocation schedule based on the updated expert allocation model and the actual customer demand by:

selecting a second set of customers based on the actual customer demand, and
matching the second set of customers to a second set of available experts, to obtain an updated customer-expert allocation schedule; and

transmit the updated customer-expert allocation schedule to the performance analytics dashboard.

12. The system of clause 10 or 11, wherein the demand predictor is further configured to:

obtain at least an expert usage data corresponding to a first expert of the plurality of available experts, and a customer demand data corresponding to a first customer from a customer management history database in the data repository; and
obtain the expert availability forecasting model by:
predicting the at least first time slot, wherein the first expert is available to the first customer, based on at least the expert usage data, and the customer demand data.

13. The system of clause 10, 11 or 12, wherein the resource allocation engine is further configured to:

define at least a first decision variable for a mixed integer linear programming (MILP) model,
define an objective function of the MILP model based on the expert availability forecasting model, and
define at least a first constraint of the MILP model, to obtain a defined MILP model comprising the at least first decision variable, the objective function and the at least first constraint; and
generate the expert allocation model by processing the defined MILP model with the MILP solver.

14. The system of any of clauses 10 to 13, wherein the customer management application is further configured to:
match the first set of customers to the first set of available experts by:

obtaining a set of expertise requirements corresponding to a first customer of the first set of customers, and
matching the set of expertise requirements to a set of qualifications corresponding to a first expert of the first set of available experts based on a matching function.

15. The system of clause 14, wherein the customer management application is further configured to:

in response to determining a match between the set of expertise requirements and the set of qualifications, determine that the first expert is unmatched in the at least first time slot, and
in response to determining that the first expert is unmatched in the at least first time slot, match the first expert to the first customer in the at least first time slot.

16. The system of clause 11, wherein the customer management application is further configured to:

modify the plurality of available experts based on the at least one expert availability event to obtain a modified plurality of available experts corresponding to the at least first time slot, in response to the at least one expert availability event corresponding to the at least first time slot,
select the second set of available experts from the modified plurality of available experts based on the actual expert availability; and
cause the demand predictor to update the expert availability forecasting model by:
modifying the expert availability forecasting model including the at least first time slot, the second set of available experts, and the actual customer demand,
to obtain the updated expert availability model.

17. The system of clause 11 or 16, wherein the resource allocation engine is further configured to:

update at least a first constraint of a MILP model, based on the updated expert availability model, wherein the MILP model comprises at least a first decision variable, an objective function and the first constraint, and modify the expert allocation model by processing the MILP model, to obtain the updated expert allocation model.

18. The system of clause 11, 16 or 17, wherein the customer management application is further configured to update the customer-expert allocation schedule, by performing operations further comprising:

obtaining a set of expertise requirements corresponding to a first customer of the second set of customers, matching the set of expertise requirements to a set of qualifications corresponding to a first expert of the second set of available experts based on a matching function, in response to determining a match between the set of expertise requirements and the set of qualifications, determining that the first expert is unmatched in the at least first time slot, and in response to determining that the first expert is unmatched in the at least first time slot, matching the first expert to the first customer in the at least first time slot.

19. A method comprising:

obtaining an expert availability forecasting model comprising at least a first time slot, a plurality of available experts corresponding to the at least first time slot, and a predicted customer demand corresponding to the at least first time slot; generating an expert allocation model including a first set of available experts selected from the plurality of available experts, allocated to the at least first time slot based on the expert availability forecasting model; selecting a first set of customers corresponding to the predicted customer demand; matching the first set of customers to the corresponding first set of available experts in the at least first time slot, based on the expert allocation model to obtain a customer-expert allocation schedule; transmitting the customer-expert allocation schedule to a performance analytics dashboard; monitoring at least one data source for at least one expert availability event; updating the expert availability forecasting model with:

the at least one expert availability event, an actual expert availability corresponding to the at least first time slot, and an actual customer demand corresponding to the at least first time slot,

to obtain an updated expert availability model; modifying the expert allocation model based on the updated expert availability model to obtain an updated expert allocation model; updating the customer-expert allocation schedule based on the updated expert allocation model and the actual customer demand by:

selecting a second set of customers based on the actual customer demand, and matching the second set of customers to a second set of available experts to obtain an updated customer-expert allocation schedule; and

transmitting the updated customer-expert allocation schedule to the performance analytics dashboard.

20. The method of clause 19, wherein generating the expert allocation model further comprises:

defining at least a first decision variable for a mixed integer linear programming (MILP) model; defining an objective function of the MILP model based on the expert availability forecasting model; defining at least a first constraint of the MILP model, to obtain a defined MILP model comprising the at least first decision variable, the objective function and the at least first constraint; and generating the expert allocation model by processing the defined MILP model.

**Claims**

1. A method comprising:

   obtaining an expert availability forecasting model comprising at least a first time slot, a plurality of available experts corresponding to the at least first time slot, and a predicted customer demand corresponding to the at least first time slot;
   generating an expert allocation model including a first set of available experts selected from the plurality of available experts, allocated to the at least first time slot based on the expert availability forecasting model;
   selecting a first set of customers corresponding to the predicted customer demand;
   matching the first set of customers to the corresponding first set of available experts in the

   at least first time slot, based on the expert allocation model,
   to obtain a customer-expert allocation schedule;

   transmitting the customer-expert allocation schedule to a performance analytics dashboard; and
   monitoring at least one data source for at least one expert availability event.

2. The method of claim 1, further comprising:

   updating the expert availability forecasting model with:

   the at least one expert availability event,
   an actual expert availability corresponding to the at least first time slot,
   and an actual customer demand corresponding to the at least first time slot,

   to obtain an updated expert availability model;
   modifying the expert allocation model based on the updated expert availability model to obtain an updated expert allocation model;
   updating the customer-expert allocation schedule based on the updated expert allocation model and the actual customer demand by:

   selecting a second set of customers based on the actual customer demand, and
   matching the second set of customers to a second set of available experts,

   to obtain an updated customer-expert allocation schedule; and
   transmitting the updated customer-expert allocation schedule to the performance analytics dashboard.

3. The method of claim 1 or 2, wherein obtaining the expert availability forecasting model further comprises:

   obtaining at least an expert usage data corresponding to a first expert of the plurality of available experts, and a customer demand data corresponding to a first customer from a customer management history database in a data repository; and
   obtaining the expert availability forecasting model by:
   predicting the at least first time slot, wherein the first expert is available to the first customer, based on at least the expert usage data, and the customer demand data.

4. The method of any preceding claim, wherein generating the expert allocation model further comprises:

   defining at least a first decision variable for a mixed integer linear programming (MILP) model;
   defining an objective function of the MILP model based on the expert availability forecasting model;
   defining at least a first constraint of the MILP model, to obtain a defined MILP model comprising the at least first decision variable, the objective function and the at least first constraint; and
   generating the expert allocation model by processing the defined MILP model.

5. The method of any preceding claim, wherein matching the first set of customers to the first set of available experts further comprises:

obtaining a set of expertise requirements corresponding to a first customer of the first set of customers; and
matching the set of expertise requirements to a set of qualifications corresponding to a first expert of the first set of available experts based on a matching function.

6. The method of claim 5, further comprising:

in response to determining a match between the set of expertise requirements and the set of qualifications, determining that the first expert is unmatched in the at least first time slot; and
in response to determining that the first expert is unmatched in the at least first time slot, matching the first expert to the first customer in the at least first time slot.

7. The method of claim 2, wherein updating the expert availability forecasting model further comprises:

responsive to the at least one expert availability event corresponding to the at least first time slot,
modifying the plurality of available experts based on the at least one expert availability event to obtain a modified plurality of available experts corresponding to the at least first time slot;
selecting the second set of available experts from the modified plurality of available experts based on the actual expert availability; and
modifying the expert availability forecasting model including the at least first time slot, the second set of available experts, and the actual customer demand to obtain the updated expert availability model.

8. The method of claim 2 or 7, wherein modifying the expert allocation model further comprises:

updating at least a first constraint of a MILP model, based on the updated expert availability model,
wherein the MILP model comprises at least a first decision variable, an objective function and the first constraint; and
modifying the expert allocation model by processing the MILP model, to obtain the updated expert allocation model.

9. The method of claim 2, 7 or 8, wherein updating the customer-expert allocation schedule further comprises:

obtaining a set of expertise requirements corresponding to a first customer of the second set of customers;
matching the set of expertise requirements to a set of qualifications corresponding to a first expert of the second set of available experts based on a matching function;
in response to determining a match between the set of expertise requirements and the set of qualifications, determining that the first expert is unmatched in the at least first time slot; and
in response to determining that the first expert is unmatched in the at least first time slot, matching the first expert to the first customer in the at least first time slot.

10. A system comprising:

at least one computer processor;
a data repository;
a demand predictor, executing on the at least one computer processor;
a resource allocation engine, comprising a MILP solver, and executing on the at least one computer processor;
an adjustment tool, executing on the at least one computer processor; and
a customer management application, executing on the at least one computer processor and configured to:

obtain, from the demand predictor, an expert availability forecasting model comprising at least a first time slot, a plurality of available experts corresponding to the at least first time slot, and a predicted customer demand corresponding to the at least first time slot,
cause the resource allocation engine to generate an expert allocation model including a first set of available experts selected from the plurality of available experts, allocated to the at least first time slot based on the expert availability forecasting model,
select a first set of customers corresponding to the predicted customer demand,
match the first set of customers to the corresponding first set of available experts in the at least first time slot, based on the expert allocation model,
to obtain a customer-expert allocation schedule,

transmit the customer-expert allocation schedule to a performance analytics dashboard, and
cause the adjustment tool to monitor at least one data source for at least one expert availability event.

11. The system of claim 10, wherein the customer management application is further configured to:

obtain an updated expert availability model by causing the demand predictor to update the expert availability forecasting model with:

the at least one expert availability event,
an actual expert availability corresponding to the at least first time slot,
and an actual customer demand corresponding to the at least first time slot;

obtain an updated expert allocation model by causing the resource allocation engine to modify the expert allocation model based on the updated expert availability model;
update the customer-expert allocation schedule based on the updated expert allocation

model and the actual customer demand by:

selecting a second set of customers based on the actual customer demand, and
matching the second set of customers to a second set of available experts,

to obtain an updated customer-expert allocation schedule; and

transmit the updated customer-expert allocation schedule to the performance analytics dashboard.

12. The system of claim 10 or 11, wherein the demand predictor is further configured to:

obtain at least an expert usage data corresponding to a first expert of the plurality of available experts, and a customer demand data corresponding to a first customer from a customer management history database in the data repository; and
obtain the expert availability forecasting model by:
predicting the at least first time slot, wherein the first expert is available to the first customer, based on at least the expert usage data, and the customer demand data.

13. The system of claim 10, 11 or 12, wherein the resource allocation engine is further configured to:

define at least a first decision variable for a mixed integer linear programming (MILP) model,
define an objective function of the MILP model based on the expert availability forecasting model, and
define at least a first constraint of the MILP model, to obtain a defined MILP model comprising the at least first decision variable, the objective function and the at least first constraint; and
generate the expert allocation model by processing the defined MILP model with the MILP solver.

14. The system of any of claims 10 to 13, wherein the customer management application is further configured to:
match the first set of customers to the first set of available experts by:

obtaining a set of expertise requirements corresponding to a first customer of the first set of customers, and
matching the set of expertise requirements to a set of qualifications corresponding to a first expert of the first set of available experts based on a matching function.

15. The system of claim 14, wherein the customer management application is further configured to:

in response to determining a match between the set of expertise requirements and the set of qualifications, determine that the first expert is unmatched in the at least first time slot, and
in response to determining that the first expert is unmatched in the at least first time slot, match the first expert to the first customer in the at least first time slot.

100
SYSTEM

SERVER COMPUTING SYSTEM 110

CUSTOMER MANAGEMENT APPLICATION 102

PERFORMANCE ANALYTICS DASHBOARD 103

RESOURCE ALLOCATION ENGINE 105

MIXED INTEGER LINEAR PROGRAMMING (MILP) SOLVER 106

DEMAND PREDICTOR 104

ADJUSTMENT TOOL 107

SECURITY AND COMPLIANCE LAYER 108

EXTERNAL DATA SOURCE(S) 130

DATA REPOSITORY 120

CUSTOMER MANAGEMENT HISTORY 122

CUSTOMER DEMAND DATA 123

EXPERT USAGE DATA 124

PERFORMANCE METRICS DATA 125

EVENT STORE 126

CUSTOMER DATA 127

EXPERT DATA 128

FIG. 1

200

START

Collect and analyze historical data of customer demand, expert availability and performance metrics
202

Estimate future expertise demand in increments of a given time slot for an upcoming year, based on the historical data to obtain an expert availability forecast model  204

Obtain an expert allocation model across predicted expert allocation demand peaks and troughs, based on the expert availability forecast model  206

302

Match customers to experts based on specific expertise requests of the customer, optimizing for time slots and expert availability  to obtain a customer-expert allocation schedule  208

Display the customer expert allocation schedule on a performance analytics dashboard  210

308

Monitor actual expert availability and actual customer demand during demand peaks and availability troughs, and external events affecting expert availability, to dynamically reallocate experts to customers  212

Evaluate expert allocation against overall system performance, customer satisfaction scores and expert allocation efficiency  214

END

*FIG. 2*

300

START

206

Define decision variables for the mixed-integer linear programming (MILP) model 302

Define the objective function for the mixed-integer programming model, including multiple objective optimizations 304

Formulate constraints for the objective function 306

212

Update the constraints based on static and dynamic events 308

Iteratively compute solutions for the objective function within the formulated constraints using a mixed integer program solver until an optimal solution is obtained 310

Perform sensitivity analysis of the solutions under varying input parameters 312

Validate the results with actual data and adjust parameters to re-compute the solution 314

END

*FIG. 3*

500

| BU | All ⌄ | Customer Eco Parent | All ⌄ | Forecast Group | All ⌄ | Customer Ecosystem | All ⌄ |
|---|---|---|---|---|---|---|---|

**Actual Count by SupplyGroup** ⊙ Last 1 day

| supplyGroup ▽ | ActualCount (count) | lunchCount (count) | BreakCount (count) | AvailableC |
|---|---|---|---|---|
| SBG_US_OL_QBO_EN | 965 | 745 | 791 | |
| | 902 | 267 | 269 | |
| SBG_NOSTAFFGROU | 902 | 398 | 241 | |
| SBSEG_QBL_OG_FO_ | 639 | 254 | 184 | |
| SBG_US_OL_PR-C_EN | 546 | 396 | 411 | |
| SBSEG_QBL_DIWM_U | 526 | 341 | 486 | |
| SBG_US_DT_PP_EN_F | 459 | 366 | 367 | |
| SBG_US_OL_PR-E_EN | 437 | 295 | 319 | |
| SBG_US_OL_PCS_EN | 417 | 330 | 351 | |
| SBG_US_DT_DIY_EN_ | 263 | 223 | 228 | |
| SBG_US_PTO_AST_S( | 257 | 213 | 150 | |
| SBSEG_QBL_OG_BO_ | 247 | 92 | 45 | |
| SBG_US_DT_ES_EN_F | 237 | 153 | 168 | |
| CTG_US_PE_DESKTO | 201 | 58 | 64 | |

508

502

**BU demand overview current shift (old)** ⊙ Last 8 hours

| Time | businessUnit ▽ | sla%300 | sla%600 |
|---|---|---|---|
| 2024-11-14 23:43:02. | CG | 86.8% | 86.8% |
| 2024-11-14 23:43:02. | PCG | 82.8% | 82.8% |
| 2024-11-14 23:43:02. | SBSEG | 70.9% | 70.9% |

504

**BU demand overview current period** ⊙ Last 30 minutes

| Time | businessUnit ▽ | sla%300 | sla%600 |
|---|---|---|---|
| 2024-11-15 07:13:02. | CG | 94.7% | 94.7% |
| 2024-11-15 07:13:02. | PCG | 72.6% | 72.6% |
| 2024-11-15 07:13:02. | SBSEG | 81.9% | 81.9% |

506

**BU demand overview current shift** ⊙ Last 8 hours

| businessUnit ▽ | asa | aht | sla240 % |
|---|---|---|---|
| SBSEG | 2.66 mins | 21.8 mins | 80.7 |

600
COMPUTING
SYSTEM

612
OUTPUT DEVICE(S)

604
NON-PERSISTENT
STORAGE

602
COMPUTER
PROCESSOR(S)

606
PERSISTENT
STORAGE

608
COMMUNICATION
INTERFACE

610
INPUT DEVICE(S)

*FIG. 6A*

620
NETWORK

622
NODE X

624
NODE Y

626
CLIENT DEVICE

*FIG. 6B*

Europäisches
Patentamt

European
Patent Office

Office européen
des brevets

# EUROPEAN SEARCH REPORT

**Application Number**

EP 26 15 1876

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/360783 A1 (BIRRU DAGNACHEW ET AL) 9 November 2023 (2023-11-09) * paragraph [0054] - paragraph [0302]; figures 6-10 * | 1-15 | INV. G06Q10/06 G06Q10/04 G06N5/01 |
| X | US 2020/210936 A1 (BRAND GILAD [IL] ET AL) 2 July 2020 (2020-07-02) * paragraph [0143] - paragraph [0239]; figures 6a-8e * | 1-15 | |
| A | US 2022/027837 A1 (D'ATTILIO WILLIAM [US] ET AL) 27 January 2022 (2022-01-27) * paragraph [0052] - paragraph [0070]; figures 2-5 * | 1-15 | |

**TECHNICAL FIELDS SEARCHED (IPC)**

G06Q
G06N

The present search report has been drawn up for all claims

| Place of search | Date of completion of the search | Examiner |
|---|---|---|
| Munich | 22 May 2026 | Radovic, Dusica |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 26 15 1876

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2026

| Patent document cited in search report | Publication date | Patent family member(s) | Publication date |
|---|---|---|---|
| US 2023360783 A1 | 09-11-2023 | NONE | |
| US 2020210936 A1 | 02-07-2020 | US 2020210918 A1 | 02-07-2020 |
| | | US 2020210919 A1 | 02-07-2020 |
| | | US 2020210921 A1 | 02-07-2020 |
| | | US 2020210931 A1 | 02-07-2020 |
| | | US 2020210932 A1 | 02-07-2020 |
| | | US 2020210933 A1 | 02-07-2020 |
| | | US 2020210936 A1 | 02-07-2020 |
| | | US 2020210937 A1 | 02-07-2020 |
| | | US 2020210938 A1 | 02-07-2020 |
| | | US 2020210939 A1 | 02-07-2020 |
| | | US 2020210943 A1 | 02-07-2020 |
| | | US 2020210959 A1 | 02-07-2020 |
| | | US 2020210961 A1 | 02-07-2020 |
| | | US 2020210962 A1 | 02-07-2020 |
| | | US 2020210963 A1 | 02-07-2020 |
| | | US 2020210964 A1 | 02-07-2020 |
| | | US 2020210965 A1 | 02-07-2020 |
| | | WO 2020140038 A1 | 02-07-2020 |
| US 2022027837 A1 | 27-01-2022 | AU 2021311838 A1 | 16-02-2023 |
| | | BR 112023001188 A2 | 11-04-2023 |
| | | CA 3186820 A1 | 27-01-2022 |
| | | CN 116368505 A | 30-06-2023 |
| | | CO 2023001844 A2 | 09-06-2023 |
| | | EP 4186016 A1 | 31-05-2023 |
| | | JP 2023537278 A | 31-08-2023 |
| | | US 2022027837 A1 | 27-01-2022 |
| | | WO 2022020796 A1 | 27-01-2022 |

EPO FORM P0459

For more details about this annex : see Official Journal of the European Patent Office, No. 12/82